# DEMANDE DE BREVET EUROPEEN

(11) **EP 2 671 782 A1**
(43) Date de publication de la demande: **11.12.2013**
(21) Numéro de dépôt: 13170560.0
(22) Date de dépôt: 05.06.2013
(51) Int. Cl.: B62D 33/04

(54) **Module de carrosserie pour véhicule frigorifique comprenant un panneau d'isolation sous vide, et procédé de fabrication associé**

(30) Priorité: 05.06.2012 FR 1255206
(71) Demandeur: Jean Chereau SAS, 50220 Ducey (FR)
(72) Inventeur: Chaillou, Frédéric, 35133 St Sauveur des Landes (FR); Amelot, Frédéric, 35760 SAINT GREGOIRE (FR); Lecuir, Christophe, 50300 MARCEY LES GREVES (FR); Huard, Jérôme, 50300 SAINT MARTIN DES CHAMPS (FR)
(74) Mandataire: Casalonga, Axel

(57) **Abrégé**

Le module de carrosserie pour véhicule frigorifique, notamment pour véhicule routier de transport de marchandises, comprend au moins un élément d'isolation sous vide 32 pourvu d'une âme 38 et d'une membrane d'encapsulation 40 de ladite âme, une plaque 34 support sur laquelle est fixé ledit élément d'isolation sous vide, et une couche de recouvrement 36 disposée sur la membrane d'encapsulation 40 de l'élément d'isolation sous vide et sur la plaque 34 support de manière à noyer ledit élément d'isolation sous vide.

## Description

La présente invention concerne le domaine général des véhicules frigorifiques, et notamment des véhicules frigorifiques utilisés pour le transport de marchandises.

Plus particulièrement, la présente invention concerne un module de carrosserie utilisé pour la fabrication d'une carrosserie frigorifique destinée à être montée par exemple sur le châssis d'un véhicule routier de transport tel qu'un camion, une semi-remorque ou sur une remorque.

De telles carrosseries frigorifiques permettent de transporter des marchandises ou des denrées périssables nécessitant d'être maintenues à une température constante, généralement inférieure à la température extérieure. Dans ce but, les carrosseries comprennent des groupes frigorifiques pour maintenir, dans un espace intérieur de chargement, la température adaptée à la conservation des marchandises. Classiquement, les parois d'une carrosserie frigorifique sont formées à partir de panneaux composites multicouches.

Pour obtenir une carrosserie frigorifique présentant de bonnes propriétés d'isolation thermique, il est connu d'utiliser des panneaux d'isolation sous vide comportant un matériau isolant poreux formant une âme qui est encapsulée à l'intérieur d'une membrane étanche à l'air et à la vapeur.

La demande de brevet EP-A2-1 785 337 décrit par exemple une carrosserie frigorifique dans laquelle chacune de ses parois comprend des panneaux d'isolation sous vide, des couches de recouvrement intérieure et extérieure pourvues de fibres de verre, une couche de mousse en polyuréthane prévue entre les panneaux d'isolation sous vide et la couche de recouvrement extérieure, des structures ou plaques de soutien intercalées entre les panneaux d'isolation adjacents, et une pluralité de couches de colle pour fixer entre eux les panneaux d'isolation, la couche de mousse, les plaques de soutien ainsi que les couches de recouvrement.

Lors de l'assemblage de ces différents éléments pour former chaque paroi de la carrosserie, la manipulation des panneaux d'isolation sous vide est délicate car ces panneaux sont relativement souples et fragiles. En outre, les membranes d'encapsulation des panneaux d'isolation peuvent être détériorées lors de cette manipulation, par exemple percées ou encore déchirées. Ceci réduit fortement les performances énergétiques de la carrosserie frigorifique.

Par ailleurs, dans ce document, pour obtenir une paroi de carrosserie frigorifique suffisamment rigide, il est nécessaire d'utiliser les structures ou plaques de soutien reliant les panneaux d'isolation sous vide. Ceci augmente le nombre d'éléments à assembler et le temps de fabrication d'une paroi de carrosserie.

Afin de remédier à ces inconvénients, il est possible d'utiliser un module de carrosserie comprenant au moins un panneau d'isolation sous vide et une enveloppe de protection surmoulée autour dudit panneau de manière à le noyer entièrement. L'enveloppe de protection est avantageusement réalisée dans un matériau thermodurcissable qui présente de bonnes propriétés d'isolation thermique tel qu'un polyuréthane. L'enveloppe permet notamment de protéger le panneau d'isolation sous vide en cas de chocs du module de carrosserie contre un élément extérieur. Ceci limite les risques de détérioration de la membrane d'encapsulation du panneau d'isolation. Pour plus de détails sur un tel module de carrosserie, on pourra se référer à la demande de brevet FR-A1-2 963 291 de la demanderesse.

Cette solution est avantageuse dans la mesure où le module de carrosserie hybride obtenu présente une résistance mécanique aux chocs améliorée. Toutefois, la demanderesse a constaté que l'enveloppe de protection peut présenter une densité hétérogène et une présence élevée de bulles d'air dans son épaisseur. Ceci engendre une diminution des propriétés d'isolation thermique du module de carrosserie. En outre, les portions ou zones de l'enveloppe de protection comprenant les bulles d'air sont des zones sujettes au délaminage entre ladite enveloppe et le panneau d'isolation sous vide. Ceci crée localement des zones de faiblesse mécanique.

Par ailleurs, avec un tel surmoulage de l'enveloppe de protection, l'opération de positionnement du ou des panneaux d'isolation sous vide à l'intérieur du moule de fabrication associé avant surmoulage peut être délicate à réaliser. En outre, la structure du moule de fabrication est relativement complexe.

La présente invention vise à remédier à ces inconvénients.

Plus particulièrement, la présente invention vise à prévoir un module de carrosserie pour véhicule frigorifique, notamment pour véhicule routier de transport de marchandises, présentant de bonnes propriétés d'isolation thermique et facile à fabriquer.

La présente invention vise également à prévoir un module de carrosserie présentant de bonnes propriétés de résistance mécanique aux chocs, ainsi qu'une bonne résistance à la flexion et à la torsion.

La présente invention vise encore à prévoir un module de carrosserie pouvant être aisément manipulé avec un risque limité de détérioration.

Dans un mode de réalisation, un module de carrosserie pour véhicule frigorifique, notamment pour véhicule routier de transport de marchandises, comprend au moins un élément d'isolation sous vide pourvu d'une âme et d'une membrane d'encapsulation de ladite âme, une plaque support sur laquelle est disposé ledit élément d'isolation sous vide, et une couche de recouvrement disposée sur la membrane d'encapsulation de l'élément d'isolation sous vide et sur la plaque support de manière à noyer ledit élément d'isolation sous vide.

Lors de la fabrication d'un panneau de carrosserie frigorifique, le module peut être transporté et manipulé sans risque de détérioration de l'élément d'isolation sous vide. En effet, la plaque support et la couche de recouvrement protègent conjointement l'élément d'isolation sous vide en cas de chocs du module hybride contre un élément extérieur. L'élément d'isolation sous vide est noyé ou encapsulé entre la plaque support et la couche de recouvrement. L'élément d'isolation sous vide est disposé sur la plaque support et la couche de recouvrement forme un bloc d'encapsulation ou d'enrobage recouvrant au moins en partie la plaque support et les portions de l'élément d'isolation sous vide laissées libres par ladite plaque. La couche de recouvrement et la plaque support permettent d'obtenir un module relativement rigide et facile à manipuler.

La disposition d'une couche de recouvrement rigide sur la membrane d'encapsulation souple de l'élément d'isolation sous vide et le montage dudit élément d'isolation sur une plaque support rigide limitent le risque de détérioration de la membrane. En outre, dans le cas où la couche de recouvrement est surmoulée sur la membrane d'encapsulation de l'élément d'isolation sous vide et sur la plaque de support, grâce à la disposition dudit élément d'isolation contre la plaque support, on favorise l'obtention d'une couche d'enrobage surmoulée présentant une densité homogène et on limite sensiblement le risque de bulles d'air au sein de ladite couche. En effet, avec l'utilisation d'une telle plaque de support, l'écoulement de matière sur l'élément d'isolation sous vide et sur ladite plaque est relativement homogène lors de l'opération de surmoulage. Par ailleurs, la disposition de l'élément d'isolation sous vide sur la plaque support permet un positionnement facile et précis dudit élément d'isolation à l'intérieur du moule de fabrication associé.

Dans un mode de réalisation préféré, la couche de recouvrement est disposée sur la membrane d'encapsulation de l'élément d'isolation sous vide et sur la plaque support de manière à noyer entièrement ledit élément d'isolation sous vide. Alternativement, il peut être possible de noyer partiellement l'élément d'isolation sous vide, par exemple avec un recouvrement dudit élément compris entre 90 et 95 % de sa surface laissée libre par la plaque support. Cependant, le fait de noyer entièrement l'élément d'isolation sous vide et de recouvrir ainsi en totalité les portions dudit élément d'isolation sous vide laissées libres par la plaque support permet de limiter sensiblement le risque de détérioration de cet élément.

Avantageusement, la couche de recouvrement et la plaque support sont réalisées chacune dans un matériau plus rigide que le matériau de la membrane d'encapsulation de l'élément d'isolation sous vide.

De préférence, la couche de recouvrement et la plaque support sont réalisées chacune dans un matériau plus rigide que le matériau de l'âme de l'élément d'isolation sous vide.

Le module de carrosserie hybride unitaire présente une tenue mécanique et une résistance aux chocs accrue par rapport à celle de l'élément d'isolation sous vide pris isolément. La plaque de support et la couche de recouvrement ont une fonction de rigidification ou de renfort du module de carrosserie.

Avantageusement, la couche de recouvrement et la plaque support sont réalisées chacune dans un matériau isolant thermiquement. On limite ainsi la formation de ponts thermiques entre l'élément d'isolation sous vide et l'extérieur.

Dans un mode de réalisation, la couche de recouvrement et la plaque support sont réalisées chacune dans un matériau thermodurcissable. De préférence, la couche de recouvrement et la plaque comprennent chacune du polyuréthane.

Avantageusement, la couche de recouvrement et la plaque support sont réalisées dans un matériau identique.

Dans un mode de réalisation, l'élément d'isolation sous vide est fixé contre une des faces principales de la plaque support, la couche de recouvrement s'étendant sur ladite face et sur la membrane d'encapsulation dudit élément d'isolation sous vide.

Le module peut comprendre une pluralité d'éléments d'isolation sous vide et une couche de recouvrement commune. Il est possible d'utiliser l'espace séparant deux éléments d'isolation sous vide adjacents d'un même module de carrosserie ou de deux modules successifs pour prévoir la fixation de barres ou rails d'arrimage, de glissières, de systèmes de penderie à viande, d'éclairages, de tubes pour le passage de câbles électriques, etc., ou encore pour la réalisation d'usinages en vue de la mise en place d'inserts de fixation.

Dans un mode de réalisation, le ou les éléments d'isolation sous vide comprennent une âme se présentant sous la forme d'une plaque réalisée dans un matériau isolant thermiquement, pouvant par exemple être à pores ouverts. Avantageusement, la membrane d'encapsulation est étanche aux gaz, notamment à l'air et à la vapeur.

L'invention concerne également un panneau de carrosserie pour véhicule frigorifique, notamment pour véhicule routier de transport de marchandises, comprenant une pluralité de modules de carrosserie tels que définis précédemment et alignés longitudinalement les uns relativement aux autres.

Dans un mode de réalisation, le panneau de carrosserie comprend des couches de revêtement recouvrant au moins en partie les modules de carrosserie. Les couches de revêtement peuvent avantageusement former un enrobage pour chacun des modules de carrosserie. Le panneau de carrosserie peut comprendre deux couches de finition opposées.

L'invention concerne encore une carrosserie frigorifique pour véhicule, notamment pour véhicule routier de transport de marchandises, comprenant un espace intérieur de chargement délimité par des parois formant des flancs verticaux, un plancher et un plafond, dans laquelle au moins une desdites parois comprend un panneau de carrosserie tel que défini précédemment.

L'invention concerne également un procédé de fabrication d'un module de carrosserie tel que défini précédemment, comprenant :
- une première étape au cours de laquelle une des faces principales de la plaque support est montée en appui contre une paroi de fond d'un moule de fabrication, l'élément d'isolation sous vide étant fixé sur une face principale opposée de ladite plaque support,
- une seconde étape au cours de laquelle le matériau polymère de la couche de recouvrement est introduit dans le moule de fabrication et recouvre la face principale de la plaque support supportant l'élément d'isolation sous vide et la membrane d'encapsulation dudit élément, et
- une troisième étape de démoulage du module de carrosserie.

Dans un mode de mise en oeuvre, le matériau polymère comprend du polyuréthane.

Dans un mode de mise en oeuvre, la plaque support est disposée à l'intérieur du moule de fabrication en position horizontale. On entend par « position horizontale », la position de la plaque support dans laquelle ses faces principales s'étendent horizontalement. Alternativement, la plaque support peut être disposée à l'intérieur du moule en position verticale. Dans un mode de mise en oeuvre, le matériau polymère de la couche de recouvrement est injecté dans le moule de fabrication. Dans une variante de mise en oeuvre, le matériau polymère peut être déposé sur l'élément d'isolation sous vide et sur la plaque support.

La présente invention sera mieux comprise à l'étude de la description détaillée de modes de réalisation pris à titre d'exemples nullement limitatifs et illustrés par les dessins annexés, sur lesquels :
- la figure 1 est une vue de côté d'une carrosserie frigorifique selon l'invention,
- la figure 2 est une vue en coupe selon l'axe II-II de la figure 1,
- la figure 3 est une vue en perspective d'un module de la carrosserie frigorifique des figures 1 et 2 selon un premier mode de réalisation de l'invention,
- la figure 4 est une vue en coupe selon l'axe IV-IV de la figure 3, et
- la figure 5 est une vue en perspective d'un module de la carrosserie frigorifique des figures 1 et 2 selon un second mode de réalisation de l'invention.

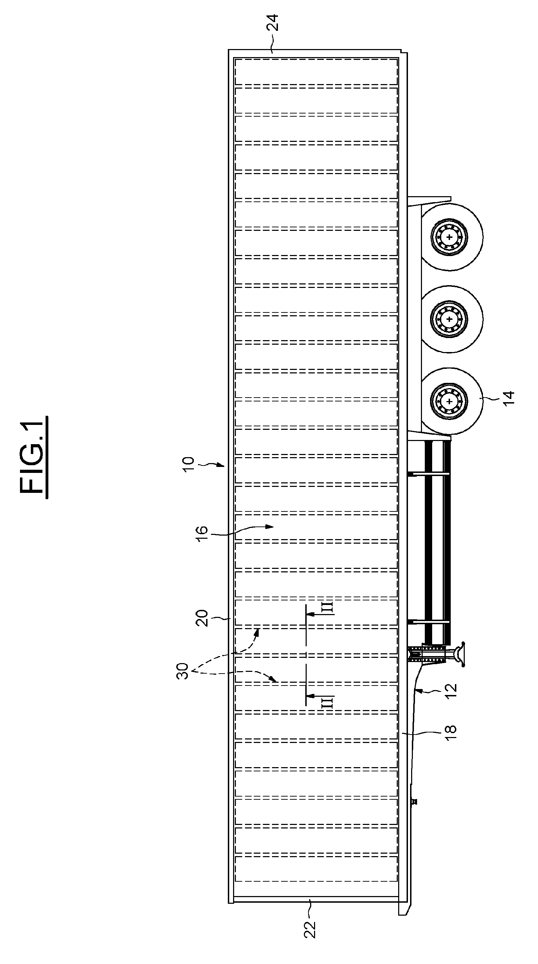

Sur la figure 1, on a représenté une carrosserie frigorifique, référencée 10 dans son ensemble, montée sur un châssis 12 de véhicule de transport routier s'étendant longitudinalement et soutenu par des roues 14.

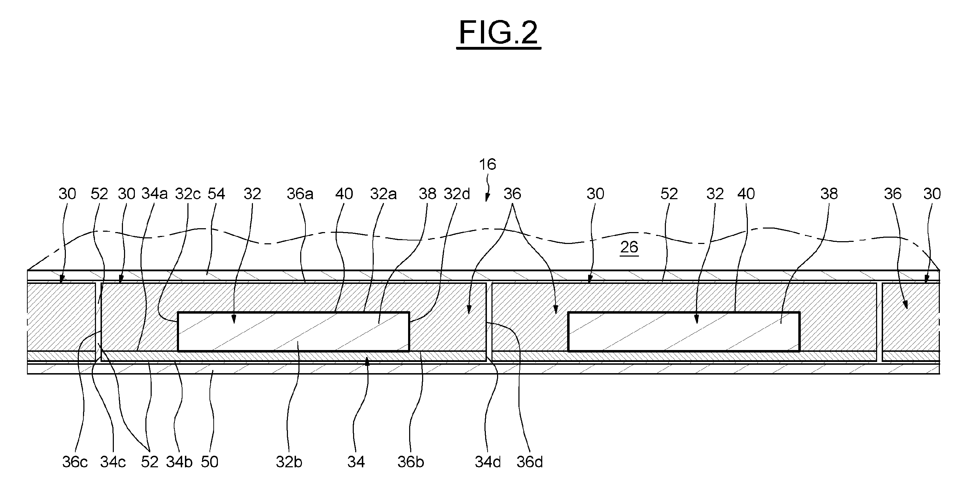

La carrosserie 10 comprend deux flancs 16 verticaux opposés, un plancher 18, un plafond 20, une face avant 22 et une porte arrière 24 assemblés entre eux pour délimiter un espace de chargement 26 intérieur qui est visible en partie à la figure 2.

Comme illustré sur cette figure, le flanc 16 comprend une pluralité de modules 30 de carrosserie identiques, alignés longitudinalement et assemblés les uns relativement aux autres comme cela sera décrit plus en détail par la suite. Les modules 30 de carrosserie se présentent sous la forme de panneaux de forme générale parallélépipédique à section rectangulaire.

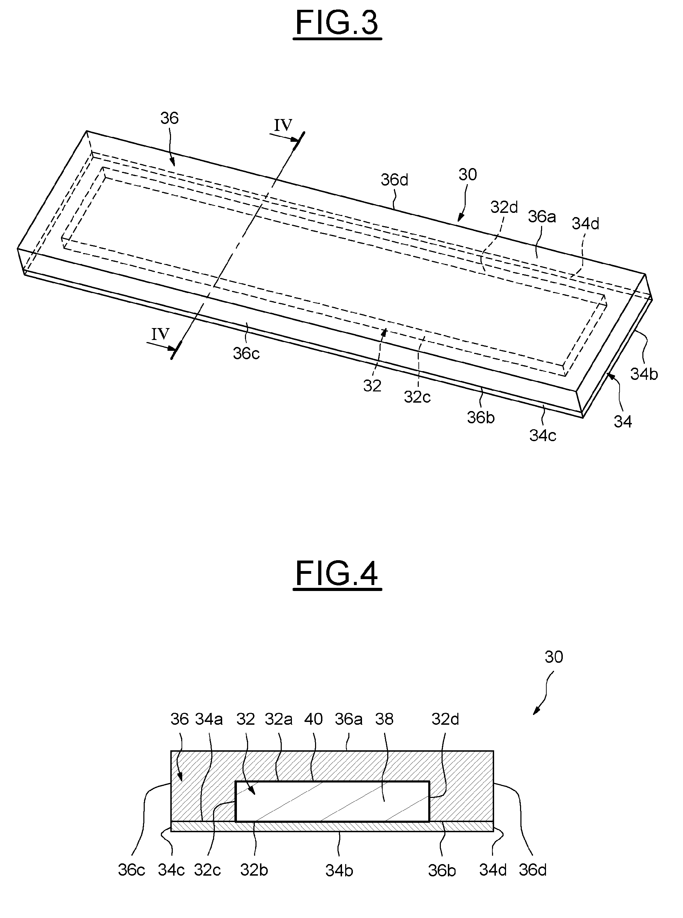

Comme illustré aux figures 3 et 4, chaque module 30 de carrosserie comprend un panneau 32 d'isolation sous vide, une plaque 34 support contre laquelle est fixé ledit panneau, et une couche 36 de recouvrement surmoulée sur ladite plaque et sur le panneau 32 d'isolation sous vide. La couche 36 recouvre entièrement le panneau 32 d'isolation de manière à ce que ledit panneau soit entièrement noyé entre ladite couche et la plaque 34 support.

Le panneau 32 d'isolation comprend un noyau ou âme 38 et une membrane 40 d'encapsulation enveloppant l'âme et étanche aux gaz, notamment à l'air et à la vapeur. Dans le mode de réalisation illustré le panneau 32 d'isolation sous vide se présente sous la forme d'une plaque souple parallélépipédique à section rectangulaire. Il comprend deux faces 32a, 32b principales opposées et deux chants 32c, 32d opposés transversaux reliant lesdites faces.

L'âme 38 est réalisée dans un matériau isolant thermiquement et comprend avantageusement une structure à pores ouverts. L'âme 38 peut par exemple être constituée de mousse de polystyrène, de polyuréthane, d'aérogel, de silice, etc. L'âme 38 est encapsulée dans la membrane 40 à pression nulle ou à faible pression.

La membrane 40 d'encapsulation recouvrant l'âme 38 peut par exemple être réalisée en polyester, en polyéthylène, en aluminium ou tout autre matériau approprié permettant de former une barrière étanche aux gaz. Le panneau 32 d'isolation est mis sous vide par évacuation de l'air emprisonné dans l'âme 38 de manière à réduire la conductivité thermique du panneau. Pour plus de détails sur les matériaux pouvant être utilisés et sur les procédés de fabrication des panneaux d'isolation sous vide, on pourra par exemple se référer aux brevets US-B2-6,863,949 et EP-B1-1 265 746.

Pour accroître la performance et la longévité du panneau 32 d'isolation sous vide, un dessiccateur (non représenté) peut être ajouté à l'intérieur de l'âme 38 pour absorber la vapeur d'eau et les gaz atmosphériques résiduels et/ou s'infiltrant à l'intérieur de la membrane 40.

La plaque 34 support présente une forme générale parallélépipédique à section rectangulaire et comprend deux faces 34a, 34b principales opposées et deux chants 34c, 34d opposés transversaux reliant lesdites faces. La face 32b principale du panneau d'isolation sous vide est positionnée et fixée en appui contre la face 34a principale de la plaque support. Dans l'exemple de réalisation illustré, le panneau 32 d'isolation sous vide est centré sur la plaque 34 support. La plaque 34 support est réalisée dans un matériau plus rigide que le matériau de la membrane 40 d'encapsulation du panneau 32 d'isolation sous vide de manière à protéger ledit panneau en cas de chocs, notamment lors de l'assemblage des différents éléments constituant le flanc 16 et lors de l'utilisation du véhicule. La plaque 34 support est également réalisée dans un matériau plus rigide que celui de l'âme 38 du panneau d'isolation sous vide pour obtenir un module 30 de carrosserie présentant une tenue mécanique accrue par rapport à celle du panneau 32 d'isolation pris isolément. La plaque 34 support peut avantageusement être réalisée dans un matériau thermodurcissable, par exemple du polyuréthane. Le polyuréthane présente de bonnes propriétés d'isolation thermique, ce qui limite les phénomènes de ponts thermiques entre le panneau 32 d'isolation sous vide et l'extérieur du module 30 de carrosserie. La plaque 34 support peut par exemple être obtenue par usinage.

Comme indiqué précédemment, la couche 36 de recouvrement recouvre le panneau 32 d'isolation sous vide afin que ledit panneau soit entièrement noyé et inaccessible depuis l'extérieur. La couche 36 de recouvrement est surmoulée sur la plaque 34 support et sur le panneau 32 d'isolation. La couche 36 recouvre la face 32a principale et les différents chants transversaux reliant ladite face à la face 32b opposée du panneau 32 d'isolation sous vide, ladite face 32a et les chants étant laissés libres par la plaque 34 support. Dans l'exemple de réalisation illustré, la couche 36 recouvre entièrement la face 34a principale de la plaque support. La couche 36 de recouvrement présente une forme générale parallélépipédique et comprend deux faces 36a, 36b principales opposées et deux chants 36c, 36d opposés transversaux reliant lesdites faces. Les faces 36a, 36b et les chants 36c, 36d s'étendent parallèlement aux faces 32a, 32b et aux chants 32c, 32d du panneau 32 d'isolation sous vide, respectivement. Les chants 36c, 36d sont situés dans le prolongement des chants 34c, 34d de la plaque support. La face 36b de la couche 36 vient recouvrir la face 34a de la plaque support et les chants 32c, 32d et la face principale 32a du panneau d'isolation sous vide.

La couche 36 de recouvrement est réalisée dans un matériau plus rigide que le matériau de la membrane 40 d'encapsulation du panneau 32 d'isolation de manière à obtenir une couche d'enrobage protégeant ledit panneau en cas de chocs. La couche 36 est également réalisée dans un matériau plus rigide que celui de l'âme 38 du panneau d'isolation pour obtenir un module 30 de carrosserie présentant une tenue mécanique accrue par rapport à celle du panneau 32 d'isolation pris isolément. La couche 36 est avantageusement réalisée dans un matériau thermodurcissable, par exemple du polyuréthane. Le polyuréthane a notamment pour avantage de pouvoir être facilement surmoulé sur la plaque 34 support et sur le panneau 32 d'isolation sous vide tout en présentant de bonnes propriétés d'isolation thermique.

Pour la fabrication du module 30 de carrosserie on procède de la manière suivante. Dans une première étape, on positionne la face 34b de la plaque 34 support contre une paroi de fond d'un moule de fabrication. Ensuite, lors d'une seconde étape, on positionne et on fixe, par exemple par collage, le panneau 32 d'isolation sous vide contre la face 34a de la plaque support située du côté opposé à la paroi de fond du moule. Alternativement, le panneau 32 d'isolation pourrait être fixé contre la face 34a de la plaque support avant positionnement de ladite plaque à l'intérieur du moule. Lors d'une troisième étape, on injecte ensuite le matériau polymère de la couche 36 de recouvrement sur la membrane 40 d'encapsulation du panneau d'isolation sous vide et sur la face 34a de la plaque support sur laquelle est fixé ledit panneau. Lors d'une quatrième étape, le moule de fabrication est fermé pendant la polymérisation de la couche 36 de recouvrement. Ensuite, lors d'une cinquième et dernière étape, le module 30 unitaire formé par la plaque 34 support, le panneau 32 d'isolation sous vide et la couche 36 de recouvrement est démoulé.

Pour fabriquer un panneau de carrosserie formant le flanc 16 par assemblage de modules 30 de carrosserie, on procède de la manière suivante. On utilise un support horizontal dont la dimension est au moins égale à la dimension du flanc 16 à fabriquer. Dans un premier temps, on enduit le support de cire synthétique afin de favoriser le démoulage ultérieur du flanc. On dépose ensuite sur la cire une couche de finition 50 polymérisable (figure 2), puis une couche de revêtement 52 polymérisable comprenant des fibres de verre sur la couche de finition. Les modules 30 de carrosserie sont ensuite appliqués contre cette couche de revêtement 52 de manière à être alignés et disposés au voisinage immédiat les uns des autres en laissant subsister un léger interstice entre deux modules immédiatement successifs. Les modules 30 de carrosserie sont disposés de manière à ce que les chants de grand côté des couches 36 de recouvrement soient parallèles les uns par rapport aux autres en s'étendant perpendiculairement à une direction longitudinale du flanc 16 à fabriquer. La dimension des chants de grand côté des couches 36 de recouvrement correspond sensiblement à la hauteur du flanc 16 à fabriquer. De nouvelles couches de revêtement 52 polymérisables sont ensuite déposées de manière à enrober entièrement chacun des modules 30 de carrosserie. Une couche de finition 54 polymérisable est ensuite déposée sur les couches de revêtement 52 du côté opposé à la couche de finition 50. L'assemblage ainsi obtenu est ensuite mis sous presse jusqu'au durcissement des couches. Après démoulage, on obtient le flanc 16 de la carrosserie frigorifique. Après assemblage de la carrosserie, la plaque 34 support de chaque module est située du côté extérieur, i.e. du côté opposé à l'espace intérieur de chargement par rapport au panneau 32 d'isolation associé.

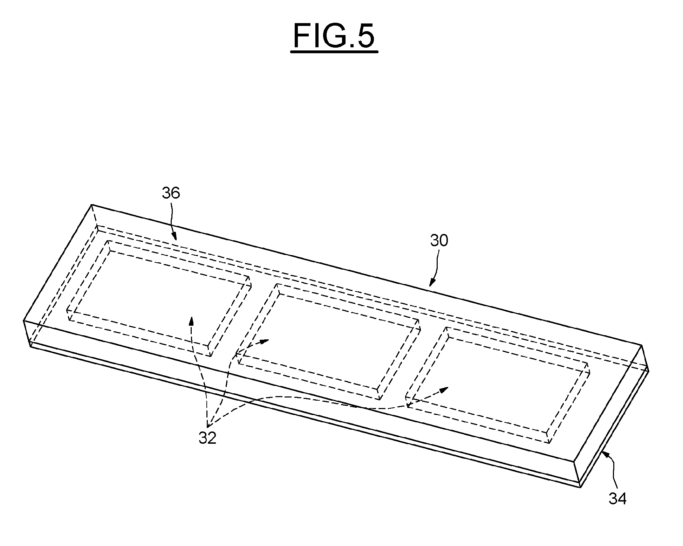

Dans le mode de réalisation précédemment décrit, un unique panneau 32 d'isolation sous vide de grande dimension est utilisé pour la fabrication d'un module 30 de carrosserie. En variante, il est également possible de prévoir une pluralité de panneaux 32 d'isolation sous vide de dimension réduite montée sur la plaque support 34 et sur lesquels est surmoulée une couche 36 de recouvrement commune comme illustrée sur la variante de réalisation de la figure 5 sur laquelle les éléments identiques portent les mêmes références. Dans cette variante de réalisation, le module 30 de carrosserie comprend trois panneaux 32 d'isolation sous vide espacés les uns par rapport aux autres. Bien entendu, le nombre de panneaux d'isolation sous vide peut être différent, par exemple égal à deux ou supérieur à trois. La position des panneaux 32 d'isolation illustrée sur cette figure n'est nullement limitative et d'autres positions des panneaux peuvent bien entendu être envisagées.

Pour la fabrication du flanc 16, il est possible de combiner différents types de modules de carrosserie, à savoir des modules comprenant un unique panneau d'isolation sous vide, une pluralité de panneaux d'isolation sous vide et une couche de recouvrement commune, et des modules dépourvus de panneaux d'isolation sous vide.

Dans les exemples précédemment décrits, les modules de carrosserie sont utilisés pour la fabrication d'un des flancs verticaux de la carrosserie. Bien entendu, l'autre flanc vertical, et/ou le plancher, et/ou le plafond, et/ou la face avant, et/ou la porte arrière formant les parois de la carrosserie frigorifique peuvent également être fabriqués à partir de tels modules élémentaires de carrosserie.

Dans les exemples de réalisation décrits, la couche de recouvrement est surmoulée sur la membrane d'encapsulation du ou des panneaux d'isolation sous vide et sur la plaque support. En variante, il pourrait être possible de prévoir une couche de recouvrement comprenant une ou plusieurs empreintes prévues chacune pour permettre le logement du panneau d'isolation sous vide associé fixé sur la plaque support. Ainsi, le ou les panneaux d'isolation sont noyés entre la couche de recouvrement et la plaque support. La couche de recouvrement est fixée sur la plaque de support par tout moyen approprié, par exemple par collage ou par adhésivage. Dans cette variante de réalisation, la couche de recouvrement est formée séparément du ou des panneaux d'isolation sous vide et de la plaque support, et est ensuite fixée sur ladite plaque pour obtenir le module unitaire. La réalisation de la couche de recouvrement par surmoulage sur la membrane d'encapsulation du ou des panneaux d'isolation sous vide et sur la plaque support est toutefois avantageuse dans la mesure où, avec un tel surmoulage, on évite la présence d'espaces ou de cavités emplies d'air entre ladite couche et le ou les panneaux d'isolation sous vide. Ainsi, le risque de délaminage du ou des panneaux d'isolation sous vide entre la couche de recouvrement et la plaque support est limité lors du roulage du véhicule. Ceci favorise le maintien au cours du temps de bonnes propriétés d'isolation thermique.

Dans les exemples de réalisation décrits, les modules sont utilisés pour la fabrication d'une carrosserie frigorifique. Cependant, les modules pourraient également être utilisés dans d'autres applications, par exemple pour la construction et l'isolation de bâtiment.

## Revendications

1. Module de carrosserie pour véhicule frigorifique, notamment pour véhicule routier de transport de marchandises, comprenant au moins un élément d'isolation sous vide (32) pourvu d'une âme (38) et d'une membrane d'encapsulation (40) de ladite âme, une plaque (34) support sur laquelle est disposé ledit élément d'isolation sous vide, et une couche de recouvrement (36) disposée sur la membrane d'encapsulation (40) de l'élément d'isolation sous vide et sur la plaque (34) support de manière à noyer ledit élément d'isolation sous vide.

2. Module selon la revendication 1, dans lequel la couche de recouvrement est disposée sur la membrane d'encapsulation (40) de l'élément d'isolation sous vide et sur la plaque (34) support de manière à noyer entièrement ledit élément d'isolation sous vide.

3. Module selon la revendication 1 ou 2, dans lequel la couche de recouvrement (36) est surmoulée sur la membrane d'encapsulation (40) et sur la plaque (34) de support.

4. Module selon l'une quelconque des revendications précédentes, dans lequel la couche de recouvrement (36) et la plaque (34) support sont réalisées chacune dans un matériau plus rigide que le matériau de la membrane d'encapsulation (40) de l'élément d'isolation sous vide.

5. Module selon l'une quelconque des revendications précédentes, dans lequel la couche de recouvrement (36) et la plaque (34) support sont réalisées chacune dans un matériau plus rigide que le matériau de l'âme (38) de l'élément d'isolation sous vide.

6. Module selon l'une quelconque des revendications précédentes, dans lequel la couche de recouvrement (36) et la plaque (34) support sont réalisées chacune dans un matériau isolant thermiquement.

7. Module selon l'une quelconque des revendications précédentes, dans lequel la couche de recouvrement (36) et la plaque (34) support sont réalisées chacune dans un matériau thermodurcissable.

8. Module selon la revendication 7, dans lequel la couche de recouvrement (36) et la plaque (34) support comprennent chacune du polyuréthane.

9. Module selon l'une quelconque des revendications précédentes, dans lequel la couche de recouvrement (36) et la plaque (34) support sont réalisées dans un matériau identique.

10. Module selon l'une quelconque des revendications précédentes, dans lequel l'élément d'isolation sous vide (32) est fixé contre une des faces principales de la plaque support, la couche de recouvrement s'étendant sur ladite face et sur la membrane d'encapsulation dudit élément d'isolation sous vide.

11. Module selon l'une quelconque des revendications précédentes, dans lequel l'âme (38) de l'élément d'isolation sous vide se présente sous la forme d'une plaque réalisée dans un matériau isolant thermiquement, la membrane d'encapsulation (40) étant étanche aux gaz.

12. Module selon l'une quelconque des revendications précédentes, comprenant une pluralité d'éléments d'isolation sous vide (32) disposés sur la plaque support et une couche de recouvrement (36) commune.

13. Panneau de carrosserie pour véhicule frigorifique, notamment pour véhicule routier de transport de marchandises, comprenant une pluralité de modules (30) de carrosserie selon l'une quelconque des revendications précédentes alignés longitudinalement les uns relativement aux autres.

14. Carrosserie frigorifique pour véhicule, notamment pour véhicule routier de transport de marchandises, comprenant un espace intérieur de chargement délimité par des parois formant des flancs verticaux, un plancher et un plafond, dans laquelle au moins une desdites parois comprend un panneau de carrosserie selon la revendication 13.

15. Procédé de fabrication d'un module de carrosserie selon l'une quelconque des revendications 1 à 12, comprenant :
- une première étape au cours de laquelle une des faces principales de la plaque support est montée en appui contre une paroi de fond d'un moule de fabrication, l'élément d'isolation sous vide étant fixé sur une face principale opposée de ladite plaque support,
- une seconde étape au cours de laquelle le matériau polymère de la couche de recouvrement est introduit dans le moule de fabrication et recouvre la face principale de la plaque support supportant l'élément d'isolation sous vide et la membrane d'encapsulation dudit élément, et
- une troisième étape de démoulage du module de carrosserie.

16. Procédé selon la revendication 15, dans lequel le matériau polymère comprend du polyuréthane.
